# EUROPEAN PATENT SPECIFICATION

(11) **EP 3 660 980 B1**
(45) Date of publication and mention of the grant of the patent: **16.08.2023**
(21) Application number: 19212157.2
(22) Date of filing: 28.11.2019
(51) Int. Cl.: H01Q 1/24, H01Q 1/44, H01Q 5/328, H01Q 9/42, H01Q 21/28

(54) **ANTENNA AND TERMINAL DEVICE HAVING SAME**
ANTENNE UND TERMINAL UMFASSEND DIESELBE
ANTENNE ET TERMINAL LA COMPRENANT

(30) Priority: 30.11.2018 CN 201811458116
(43) Date of publication of application: 03.06.2020
(73) Proprietor: Beijing Xiaomi Mobile Software Co., Ltd., Beijing 100085 (CN)
(72) Inventor: JIAO, Tao, Beijing, Beijing 100085 (CN)
(74) Representative: dompatent von Kreisler Selting Werner - Partnerschaft von Patent- und Rechtsanwälten mbB

(56) References cited:
- CN-B- 103 346 397
- US-A1- 2016 365 623
- US-A1- 2017 047 639
- US-A1- 2017 048 363
- US-A1- 2018 034 148
- US-A1- 2018 062 244
- US-A1- 2018 131 092

## Description

### TECHNICAL FIELD

The present disclosure relates to the field of communications, and in particular, to an antenna and a terminal device having the same.

### BACKGROUND

In the field of terminal devices, such as mobile phones and other mobile terminals, with the development trend of full screens and narrow bezels, and the increasing number of antennas in terminal devices, the working space for the antennas in the terminal device has become more limited.

US2018034148A1 discloses an electronic device. The electronic device includes a first antenna configured to transmit and receive signals of a plurality of frequency bands, and a second antenna disposed at an area adjacent to the first antenna. The first antenna includes a first wireless communication circuit, a first radiator, a first feeding part configured to connect the first wireless communication circuit to the first radiator, a first ground part configured to be connected to one end of the first radiator, a switching circuit configured to be connected to the first radiator in an area adjacent to the second antenna, at least one frequency band element in which a first end is connected to the switching circuit and a second end is connected to the first ground part, and at least one isolation element configured to connect the first radiator to the ground part in the area adjacent to the second antenna.

US20170047639A1 discloses an electronic device. The electronic device includes a housing including a first face, a second face, and a side face that at least partially encloses a space between the first face and the second face, a conductive member configured to form at least a portion of the side face, a ground member, at least one communication circuit, and a conductive pattern positioned within the housing, the conductive pattern electrically connected to the communication circuit and the ground member, a first electric path positioned within the housing, and configured to electrically interconnect another end of the conductive member and the communication circuit, a second electric path configured to electrically interconnect the first electric path or the conductive member and the ground member, and a third electric path configured to electrically interconnect the first electric path or the conductive member and the ground member, and including a switching circuit.

US 2017/048363 A1 discloses an electronic device. The electronic device includes a housing including a first surface, a second surface disposed facing an opposite side of the first surface, and a side surface configured to surround at least a portion of a space between the first surface and the second surface, a first elongated metal member configured to form a first portion of the side surface and including a first end and a second end, at least one communication circuit electrically connected to a first point of the first elongated metal member through a capacitive element, at least one ground member disposed in an interior of the housing, and a first conductive member configured to electrically connect a second point of the first elongated metal member to the ground member. The second point of the first elongated metal member is disposed closer to the second end than to the first point.

US 2018/062244 A1 discloses an antenna structure which is switchable between low, middle, and high frequencies includes a metal housing, a feed portion, a resonance portion, and a connecting portion. The metal housing includes a front frame, a backboard, and a side frame. The side frame defines a slot and the front frame defines a first gap and a second gap. The slot, the first gap, and the second gap separate a continuous antenna portion from the metal housing. The feed portion is electrically connected to the antenna portion for feeding current to the antenna portion. One end of the resonance portion is electrically connected to a first location of the antenna portion and another end grounded. One end of the connecting portion is electrically connected to a second location of the antenna portion and another end is electrically connected to the resonance portion.

US 2018/131092 A1 discloses an antenna structure. The antenna structure includes a metallic member, a feed portion, a ground portion, and a radiator. The metallic member defines at least one slot and is divided into a first combining portion and a second combining portion by the at least one slot. The feed portion feeds current to the first combining portion. The ground portion grounds the first combining portion. The radiator feeds current to the second combining portion. The first combining portion, the feed portion, and the ground portion cooperatively form a first antenna to activate a first mode for generating radiation signals in a first frequency band. The second combining portion and the radiator cooperatively form a second antenna to activate a second mode for generating radiation signals in a second frequency band.

CN103346397B discloses a multi-frequency antenna system applicable to a mobile terminal with a metal frame structure. The multi-frequency antenna system comprises a metal frame, a PCB and an antenna part. The metal frame is designed to be part of an antenna radiation body, two gaps are formed in the bottom portion of the metal frame, a feeding wiring part and the metal frame together form a T-shaped monopole antenna or an IFA antenna so that the metal frame itself can be used for producing low frequency and high frequency resonance, and other coupling parts can be additionally arranged to be used for adjusting the low frequency and high frequency resonance according to the needs of working frequency bands.

### SUMMARY

The present disclosure provides an antenna and a terminal device having the same.

The invention is set out in the appended set of claims.

It is to be understood that the above general descriptions and the below detailed descriptions are merely exemplary and explanatory, and are not intended to limit the present disclosure.

### BRIEF DESCRIPTION OF DRAWINGS

The accompanying drawings referred to in the specification are a part of this disclosure, and provide illustrative embodiments consistent with the disclosure and, together with the detailed description, serve to illustrate some embodiments of the disclosure.
FIG. 1 is a schematic structural diagram of an antenna according to some embodiments of the present disclosure;
FIG. 2 is a detailed schematic diagram showing a partial structure of the antenna provided in FIG. 1;
FIG. 3A is a block diagram showing a matching circuit of the antenna provided in FIG. 2;
FIG. 3B is another block diagram showing a matching circuit of the antenna provided in FIG. 2;
FIG. 4 is another detailed schematic diagram showing a partial structure of the antenna provided in FIG. 1;
FIG. 5 is a schematic structural diagram of another antenna according to some embodiments of the present disclosure;
FIG. 6 is a schematic structural diagram of still another antenna according to some embodiments of the present disclosure; and
FIG. 7 is a graph showing performance of an antenna according to some embodiments of the present disclosure, illustrating S11 of a first antenna and a second antenna and isolation between the first antenna and the second antenna.

### DETAILED DESCRIPTION

Examples will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present disclosure. Rather, they are merely examples of apparatuses and methods consistent with some aspects of the present disclosure as detailed in the appended claims.

The terms used in the present disclosure are for the purpose of describing particular examples only, and are not intended to limit the present disclosure. Terms determined by "a," "the" and "said" in their singular forms in the present disclosure and the appended claims are also intended to include plurality, unless clearly indicated otherwise in the context. It should also be understood that the term "and/or" as used herein is and includes any and all possible combinations of one or more of the associated listed items.

It is to be understood that, although terms "first," "second," "third" and the like may be used in the present disclosure to describe various information, such information should not be limited to these terms. These terms are only used to distinguish one category of information from another. For example, without departing from the scope of the present disclosure, first information may be referred as second information; and similarly, second information may also be referred as first information. Depending on the context, the word "if' as used herein may be interpreted as "when" or "upon" or "in response to determining".

Various embodiments of the present disclosure can improve performance of antennas working in restricted spaces. As the bandwidth of the terminal device becomes increasingly wider, the requirements on the environment become ever more demanding and the bezels become narrower, it may be difficult for a single antenna to cover the entire frequency band. Dual antennas have found more applications. However, it is desired to further improve isolation and efficiency of the dual antennas.

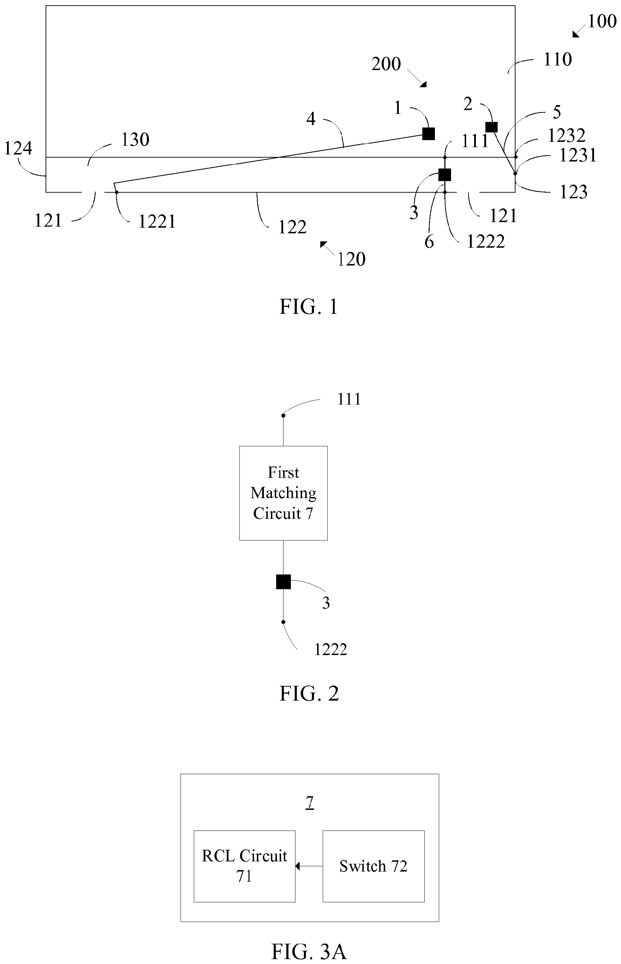

FIG. 1 is a schematic structural diagram of an antenna according to some embodiments of the present disclosure. The antenna of this example is applied to a terminal device having a metal body, and the terminal device can be a mobile terminal, such as a mobile phone, a tablet computer or the like, or can be a fixed terminal.

Referring to FIG. 1, the metal body 100 of the terminal device includes a main body 110 and a frame structure 120 connected with the main body 110. The main body 110 and the frame structure 120 enclose a space to form a receiving area 130. The frame structure 120 is provided with two slots 121 on a bottom thereof, and the two slots 121 are spaced apart. In the example, the two slots 121 divide the frame structure 120 into a first frame 122, a second frame 123, and a third frame 124. The second frame 123 and the third frame 124 are disposed respectively on two sides of the first frame 122. Further, in the example, the first frame 122 is provided with a first contact point 1221 and a third contact point 1222, the second frame 123 is provided with a second contact point 1231, and the main body 110 is provided with a fourth contact point 111.

Taking the terminal device being a mobile phone as an example, the metal body 100 is a middle frame of the mobile phone, and the bottom of the frame structure 120 refers to a bottom of the mobile phone. The shape and size of the slots 121 can be set according to design requirements of the mobile phone.

In this example, the main body 110 and the frame structure 120 are all metal parts. The main body 110 has a cuboid or cubic structure, and the frame structure 120 is connected with both sides of the bottom of the main body 110. Specifically, the second frame 123 is connected with one side of the main body 110, and the third frame 124 is connected with the other side of the main body 110. In this example, one end of the second frame 123 away from the slot 121 (the slot 121 between the first frame 122 and the second frame 123) is connected with one side of the main body 110, and one end of the third frame 124 away from the slot 121 (the slot 121 between the first frame 122 and the third frame 124) is connected with the other side of the main body 110.

In this example, the receiving area 130 can be a quadrilateral area, such as a rectangular area, a square area, or an area of other shapes.

Referring to FIG. 1, the antennas 200 includes a first feed point 1, a second feed point 2, and a first grounding point 3. The first feed point 1 and the second feed point 2 are provided in the same side of the main body 110 (as shown in FIG. 1, the right half of the main body 110) and spaced apart from each other, and the first grounding point 3 is disposed in the receiving area 130. In this example, the first feed point 1 is electrically connected with the first contact point 1221, the second feed point 2 is electrically connected with the second contact point 1231, and the first grounding point 3 is electrically connected with the third contact point 1222, and is also electrically connected with the fourth contact point 111 on the main body 110.

An electrical connection body formed by the first feed point 1, the first contact point 1221, the third contact point 1222, the first grounding point 3, and the fourth contact point 111 constitutes a first antenna, and an electrical connection body formed by the second feed point 2, the second contact point 1231, and a junction point 1232 of the second frame 123 and the main body 110 constitutes a second antenna. In addition, the first grounding point 3 of the example is disposed adjacent to the second antenna.

In the example of the present disclosure, the first feed point 1 and the second feed point 2 of the dual antenna 200 are provided in the same side of the main body 110 and spaced apart from each other, the first frame 122 is used to implement the first antenna, the second frame 123 is used to implement the second antenna, and an end of the first antenna adjacent to the second antenna is grounded, which improves the isolation between the first antenna and the second antenna and radiation efficiencies of the first antenna and the second antenna.

Optionally, the first feed point 1 and the second feed point 2 are spaced apart and disposed in one side of the main body 110 adjacent to the second frame 123 (that is, right half of the main body 110). Optionally, the first feed point 1 and the second feed point 2 are spaced apart and disposed in one side of the main body 110 adjacent to the third frame 124 (that is, left half of the main body 110). This example is further described by taking the first feed point 1 and the second feed point 2 being spaced apart and disposed in one side of the main body 110 adjacent to the second frame 123 as an example.

Referring to FIG. 1, in this example, the first grounding point 3 is disposed over an end of the first frame 122 adjacent to the second frame 123.

The position of the first contact point 1221 and the third contact point 1222 on the first frame 122 can be selected according to design requirements on performance such as frequency band of the first antenna.

Referring to FIG. 1, in this example, the first contact point 1221 is disposed at an end of the first frame 122 adjacent to the third frame 124, and the third contact point 1222 is disposed at an end of the first frame 122 adjacent to the second frame 123.

The position of the second contact point 1231 on the second frame 123 can be selected according to design requirements on performance such as frequency band of the second antenna. Optionally, the second contact point 1231 is disposed on a side of the second frame 123 away from the first frame 122.

In addition, in this example, the fourth contact point 111 is spaced apart from the first feed point 1 and the second feed point 2, respectively. Referring to FIG. 1 again, in this example, the fourth contact point 111 is disposed on a side of the main body 110 facing the receiving area 130. Of course, the fourth contact point 111 may also be disposed at other positions of the main body 110, and specifically, the position of the fourth contact point 111 on the main body 110 can be selected according to design requirements on performance such as the frequency band of the first antenna, the isolation between the first antenna and the second antenna, and the like.

In this example, the antenna 200 further includes a first trace 4, a second trace 5, and a third trace 6. The first feed point 1 is electrically connected with the first contact point 1221 through the first trace 4, and the second feed point 2 is electrically connected with the second contact point 1231 through the second trace 5, and the first grounding point 3 is electrically connected with the third contact point 1222 and the fourth contact point 111 through the third trace 6.

The shape and size of the first trace 4 and the shape and size of the third trace 6 can be selected according to design requirements on performance such as the frequency band of the first antenna, and the shape and size of the second trace 5 can be selected according to design requirements on performance such as the frequency band of the second antenna.

Referring also to FIG. 1, the first trace 4 may include a first segment and a second segment. The first segment is connected with the first contact point 1221. The second segment has one end connected with one end of the first segment away from the first contact point 1221, and the other end connected with the first feed point 1. In this example, the first segment and the second segment are disposed as a bending member, that is, a certain angle is formed between the first segment and the second segment. By adopting such a configuration, the performance of the first antenna can be improved. Optionally, the first segment is perpendicularly connected with the first frame 122. Referring to FIG. 1, in this example, the third trace 6 is perpendicularly connected with a side of the first frame 122 and the main body 110 facing the receiving area 130, respectively.

In some embodiments, a frequency range of the first antenna is (800 MHz, 2170 MHz). That is, the frequency band of the first antenna is greater than or equal to 800 MHz, and less than or equal to 2170 MHz, which can achieve coverage of low and intermediate frequency bandwidths. A frequency range of the second antenna is (2300 MHz, 2690 MHz). That is, the frequency band of the second antenna is greater than or equal to 2300 MHz, and less than or equal to 2690 MHz, which can achieve coverage of high frequency bandwidths.

The form of the first antenna and the second antenna can be designed as needed. For example, in some embodiments, the first antenna is in the form of a loop. Of course, the first antenna can also be designed in other forms as needed.

In some embodiments, the second antenna is in the form of an Inverted-F-Antenna (IFA). Of course, the second antenna can also be designed in other forms as needed.

In this example, the first antenna is in the form of a loop, and the second antenna is in the form of an IF A.

Further, in this example, a first matching circuit 7 is connected in series between the first grounding point 3 and the third contact point 1222 and/or between the first grounding point 3 and the fourth contact point 111, where the first matching circuit 7 being connected in series between the first grounding point 3 and the third contact point 1222 is an example useful for understanding the invention outside the scope of the claims. Referring to FIG. 2, in some embodiments, a first matching circuit 7 is connected in series between the first grounding point 3 and the fourth contact point 111. Specifically, referring to FIG. 3A, the first matching circuit 7 includes a resistor-inductor-capacitor (RLC) circuit 71 and a switch 72 configured to control the RLC circuit 71. The RLC circuit 71 includes a resistor, a capacitor, and an inductor. By switching the RLC circuit 71 to different impedance levels with the switch 72, the first antenna can achieve coverage of low frequency bandwidths.

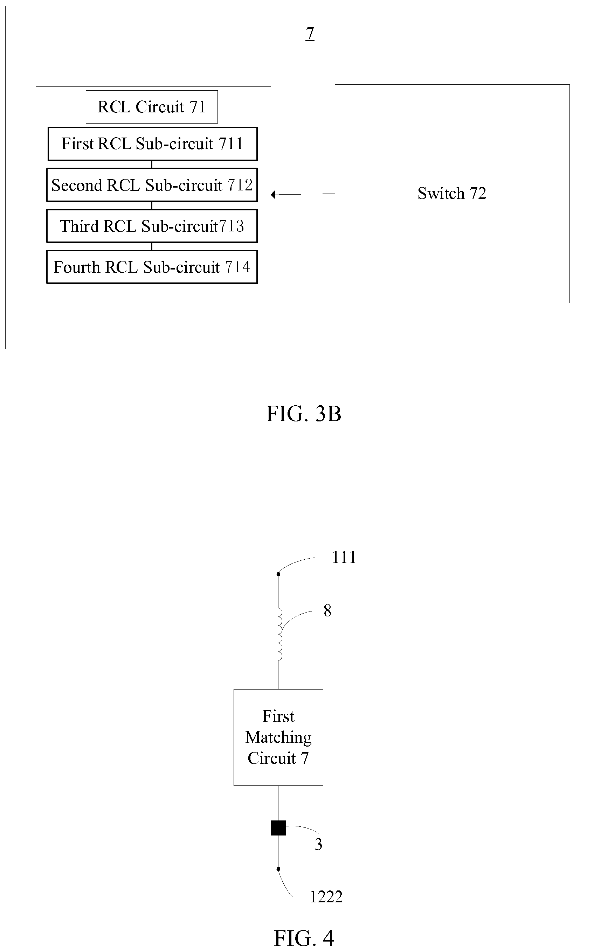

In one specific example, referring to FIG. 3B, the RLC circuit 71 includes a first RLC sub-circuit 711, a second RLC sub-circuit 712, a third RLC sub-circuit 713, and a fourth RLC sub-circuit 714. The switch 72 is a single-pole four-throw switch, and the single-pole four-throw switch is used to control the first matching circuit 7 to select one or more of the first RLC sub-circuit 711, the second RLC sub-circuit 712, the third RLC sub-circuit 713, and the fourth RLC sub-circuit 714.

Optionally, the first RLC sub-circuit 711, the second RLC sub-circuit 712, the third RLC sub-circuit 713, and the fourth RLC sub-circuit 714 have different impedances. By controlling one of the first RLC sub-circuit 711, the second RLC sub-circuit 712, the third RLC sub-circuit 713, and the fourth RLC sub-circuit 714 to be switched on and connected in series between the first grounding point 3 and the fourth contact point 111 with the single-pole four-throw switch, the frequency bands of the first antenna can fully cover low and intermediate frequency bandwidths.

In some embodiments, referring to FIG. 4, the antenna 200 further includes a tuning inductor 8. The first matching circuit 7 is connected in series with the tuning inductor 8 between the fourth contact point 111 and the first grounding point 3 to shift the resonance frequency of the first antenna at 2170 MHz to lower frequency, thereby increasing the isolation between the first antenna and the second antennas.

In addition, the second antenna includes a second matching circuit between the fourth contact point 111 and the second contact point 1231. The bandwidth and frequency offset of the second antenna can be adjusted by adjusting the position of the second contact point 1231 on the second frame 123 and adjusting the second matching circuit of the second antenna.

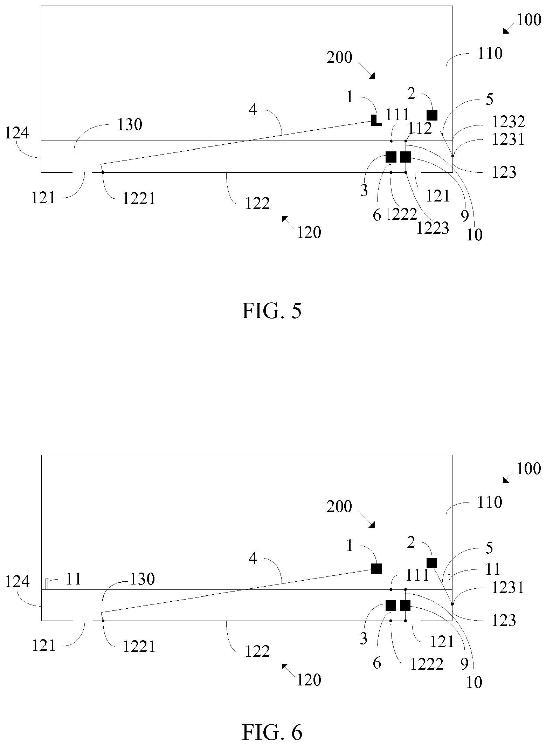

To further optimize the isolation between the first antenna and the second antenna, referring to FIG. 5, the antenna 200 may further include a second grounding point 9. The second grounding point 9 is disposed in the receiving area 130, and spaced apart from the first grounding point 3. The second grounding point 9 is electrically connected with a fifth contact point 1223 of the first frame 122 and is electrically connected with a sixth contact point 112 of the main body 110.

Optionally, the second grounding point 9 is disposed between the first grounding point 3 and the second frame 123. Further, the fifth contact point 1223 is disposed between the third contact point 1222 and the second frame 123, and the sixth contact point 112 is disposed between the fourth contact point 111 and a junction point 1232 of the main body 110 and the second frame 123.

The position of the fifth contact point 1223 on the first frame 122 and the position of the sixth contact point 112 on the main body 110 can be selected according to design requirements on the isolation between the first antenna and the second antenna. Optionally, the fifth contact point 1223 is disposed at an end of the first frame 122 adjacent to the second frame 123. Optionally, the sixth contact point 112 can be disposed on a side of the main body 110 facing the receiving area 130.

Further, in this example, the antenna 200 also includes a fourth trace 10. The second grounding point 9 is electrically connected with the fifth contact point 1223 through the fourth trace 10, and is electrically connected to the sixth contact point 112 through the fourth trace 10. The size of the fourth trace 10 can be set according to design requirements on the isolation between the first antenna and the second antenna.

Referring to FIG. 6, in some embodiments, the antenna 200 also includes a slit 11 disposed on a bottom side of the main body 110 and adjacent to the second frame 123 and/or the third frame 124. The opening of the slit 11 faces the receiving area. The slit 11 is provided to optimize the performance of the first antenna and the second antenna. The size of the slit 11 and the position of the slit 11 on the main body 110 can be set according to requirements on performance of the first antenna and the second antenna.

The material of each of the above traces can be copper or other metal such as silver, aluminium or some other suitable options. Optionally, the trace is made of copper foil. It is to be noted that the present disclosure does not limit the material of the trace, and any material capable of signal transmission is within the protection scope of the present disclosure. Each trace of the present disclosure is patterned in a corresponding region.

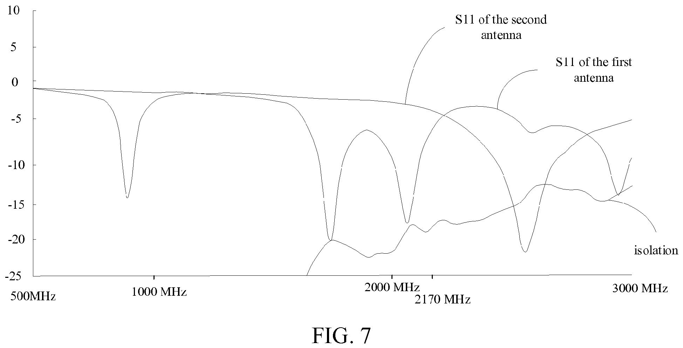

FIG. 7 is a graph showing the performance of the antenna according to some embodiments of the present disclosure. S11 (return loss characteristics) of the first antenna and the second antenna and isolation between the first antenna and the second antenna are illustrated. In the graph, the abscissa is the resonant frequency, and for S 11, the ordinate is the value of S11 in dB, and for the isolation, the ordinate is the isolation value. From FIG. 7, it can be observed that the value of S11 of the first antenna and the second antenna are both relatively small, thus the radiation efficiencies of the first antenna and the second antenna are high. In addition, the smaller the isolation value is, the better the isolation is. It can also be observed from FIG. 7 that the third valley of the S11 curve of the first antenna corresponds to a resonant frequency of smaller than 2170 MHz. In a case where the first matching circuit 7 and the tuning inductor 8 are not included in the first antenna, the third valley of a corresponding S11 curve of the first antenna corresponds to a resonant frequency of 2170 MHz. Therefore, in the example of the present disclosure, the resonance frequency of the first antenna at 2170 MHz band is shifted to lower frequency, and the isolation between the first antenna and the second antenna is increased.

Various embodiments of the present disclosure can have one or more of the following advantages: by arranging the first feed point and the second feed point of the dual antenna together, implementing the first antenna with the first frame, implementing the second antenna with the second frame, and grounding the end of the first antenna adjacent to the second antenna, it can improve the isolation between the first antenna and the second antenna and the radiation efficiencies of the first antenna and the second antenna.

In the present disclosure, the terms "installed," "connected," "coupled," "fixed" and the like shall be understood broadly, and can be either a fixed connection or a detachable connection, or integrated, unless otherwise explicitly defined. These terms can refer to mechanical or electrical connections, or both. Such connections can be direct connections or indirect connections through an intermediate medium. These terms can also refer to the internal connections or the interactions between elements. The specific meanings of the above terms in the present disclosure can be understood by those of ordinary skill in the art on a case-by-case basis.

In the description of the present disclosure, the terms "one embodiment," "some embodiments," "example," "specific example," or "some examples," and the like can indicate a specific feature described in connection with the embodiment or example, a structure, a material or feature included in at least one embodiment or example. In the present disclosure, the schematic representation of the above terms is not necessarily directed to the same embodiment or example.

Moreover, the particular features, structures, materials, or characteristics described can be combined in a suitable manner in any one or more embodiments or examples. In addition, various embodiments or examples described in the specification, as well as features of various embodiments or examples, can be combined and reorganized.

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

Various modifications of, and equivalent acts corresponding to, the disclosed aspects of the example embodiments, in addition to those described above, can be made by a person of ordinary skill in the art, having the benefit of the present disclosure, without departing from the scope of the disclosure defined in the following claims, the scope of which is to be accorded the broadest interpretation so as to encompass such modifications and equivalent structures.

It should be understood that "a plurality" or "multiple" as referred to herein means two or more. "And/or," describing the association relationship of the associated objects, indicates that there may be three relationships, for example, A and/or B may indicate that there are three cases where A exists separately, A and B exist at the same time, and B exists separately. The character "/" generally indicates that the contextual objects are in an "or" relationship.

In the present disclosure, it is to be understood that the terms "lower," "upper," "under" or "beneath" or "underneath," "above," "front," "back," "left," "right," "top," "bottom," "inner," "outer," "horizontal," "vertical," and other orientation or positional relationships are based on example orientations illustrated in the drawings, and are merely for the convenience of the description of some embodiments, rather than indicating or implying the device or component being constructed and operated in a particular orientation. Therefore, these terms are not to be construed as limiting the scope of the present disclosure.

Moreover, the terms "first" and "second" are used for descriptive purposes only and are not to be construed as indicating or implying a relative importance or implicitly indicating the number of technical features indicated. Thus, elements referred to as "first" and "second" may include one or more of the features either explicitly or implicitly. In the description of the present disclosure, "a plurality" indicates two or more unless specifically defined otherwise.

In the present disclosure, a first element being "on" a second element may indicate direct contact between the first and second elements, without contact, or indirect geometrical relationship through one or more intermediate media or layers, unless otherwise explicitly stated and defined. Similarly, a first element being "under," "underneath" or "beneath" a second element may indicate direct contact between the first and second elements, without contact, or indirect geometrical relationship through one or more intermediate media or layers, unless otherwise explicitly stated and defined.

Some other embodiments of the present disclosure can be available to those skilled in the art upon consideration of the specification and practice of the various embodiments disclosed herein. The present application is intended to cover any variations, uses, or adaptations of the present disclosure following general principles of the present disclosure and include the common general knowledge or conventional technical means in the art without departing from the present disclosure. The specification and examples can be shown as illustrative only, and the true scope of the disclosure are indicated by the following claims.

## Claims

1. An antenna, comprising a first feed point (1), a second feed point (2) and a first grounding point (3) and a metal body (100); wherein
the metal body (100) comprises a main body (110) and a frame structure (120) connected with the main body (110);
the main body (110) and the frame structure (120) enclose a space to form a receiving area (130);
the frame structure (120) is provided with two slots (121) spaced apart on a bottom thereof;
the two slots (121) divide the frame structure (120) into a first frame (122), a second frame (123) and a third frame (124);
the second frame (123) and the third frame (124) are disposed respectively on two sides of the first frame (122);
the first feed point (1) and the second feed point (2) are spaced apart from each other in a same side of the main body (110);
the first grounding point (3) is disposed in the receiving area (130);
the first feed point (1) is electrically connected with a first contact point (1221) on the first frame (122);
the second feed point (2) is electrically connected with a second contact point (1231) on the second frame (123);
the first grounding point (3) is electrically connected with a third contact point (1222) on the first frame (122), and is also electrically connected with a fourth contact point (111) on the main body (110); and
an electrical connection body comprising the first feed point (1), the first contact point (1221), the third contact point (1222), the first grounding point (3), and the fourth contact point (111) constitutes a first antenna, and an electrical connection body comprising the second feed point (2), the second contact point (1231) and a junction point (1232) of the second frame (123) and the main body (110) constitutes a second antenna, wherein the first grounding point (3) is disposed adjacent to the second antenna;
wherein the antenna further comprises:
a first matching circuit (7) connected in series between the first grounding point (3) and the fourth contact point (111);
a tuning inductor (8), the first matching circuit (7) is connected in series with the tuning inductor (8) between the fourth contact point (111) and the first grounding point (3), and
a second matching circuit between the fourth contact point (111) and the second contact point (1231);
wherein the first matching circuit (7) comprises a resistor-inductor-capacitor, RLC, circuit (71) and a switch (72) configured to control the RLC circuit (71), and the RLC circuit (71) comprises a resistor, a capacitor and an inductor.

2. The antenna according to claim 1, wherein
the first feed point (1) and the second feed point (2) are spaced apart in a side of the main body (110) adjacent to the second frame (123), and
the first grounding point (3) is disposed over an end of the first frame (122) adjacent to the second frame (123).

3. The antenna according to claim 1 or 2, wherein the first contact point (1221) is disposed at an end of the first frame (122) adjacent to the third frame (124), and the third contact point (1222) is disposed at an end of the first frame (122) adjacent to the second frame (123).

4. The antenna according to claim 3, wherein the second contact point (1231) is disposed on a side of the second frame (123) away from the first frame (122).

5. The antenna according to claim 1 or 2, wherein the fourth contact point (111) is spaced apart from the first feed point (1) and the second feed point (2), respectively.

6. The antenna according to claim 5, wherein the fourth contact point (111) is disposed at a side of the main body (110) facing the receiving area.

7. The antenna according to any of the preceding claims, wherein
the antenna further comprises a first trace (4), a second trace (5) and a third trace (6);
the first feed point (1) is electrically connected with the first contact point (1221) through the first trace (4), the second feed point (2) is electrically connected with the second contact point (1231) through the second trace (5), and the first grounding point (3) is electrically connected with the third contact point (1222) and the fourth contact point (111) through the third trace (6).

8. The antenna according to claim 7, wherein the first trace (4) comprises a first segment connected with the first contact point (1221) and a second segment connecting one end of the first segment away from the first contact point (1221) and the first feed point (1), and the first segment and the second segment are disposed as a bending member.

9. The antenna according to any of the preceding claims, wherein the first antenna has a frequency range of 800 MHz to 2170 MHz and the second antenna has a frequency range of 2300 MHz to 2690 MHz, and wherein the first antenna is in a form of a loop and the second antenna is in a form of an Inverted-F-Antenna, IF A.

10. The antenna according to claim 1, wherein the RLC circuit (71) comprises a first RLC sub-circuit (711), a second RLC sub-circuit (712), and a third RLC sub-circuit (713) and a fourth RLC sub-circuit (714), the switch (72) is a single-pole four-throw switch configured to control the first matching circuit (7) to select one or more of the first RLC sub-circuit (711), the second RLC sub-circuit (712), the third RLC sub-circuit, and the fourth RLC sub-circuit (714).

11. The antenna according to any of the preceding claims, further comprising a second grounding point (9), wherein
the second grounding point (9) is disposed in the receiving area,
the second grounding point (9) is electrically connected with a fifth contact point on the first frame (122) and electrically connected with a sixth contact point on the main body (110);
the fifth contact point is disposed between the third contact point (1222) and the second frame (123),
the sixth contact point is disposed between the fourth contact point (111) and a junction point connecting the main body (110) and the second frame (123), and
the fifth contact point (1223) is disposed at an end of the first frame (122) adjacent to the second frame (123).

12. The antenna according to any of the preceding claims, further comprising a slit (11), wherein
the slit (11) is disposed on a side of the main body (110) facing the receiving area and adjacent to the second frame (123), and/or the third frame (124), and
an opening of the slit (11) faces the receiving area.

13. A terminal device comprising the antenna (200) according to any of the preceding claims.

## Patentansprüche

1. Antenne mit einem ersten Einspeisepunkt (1), einem zweiten Einspeisepunkt (2) und einem ersten Erdungspunkt (3) und einem Metallkörper (100); wobei
der Metallkörper (100) einen Hauptkörper (110) und eine mit dem Hauptkörper (110) verbundene Rahmenstruktur (120) aufweist;
der Hauptkörper (110) und die Rahmenstruktur (120) einen Raum umschlie-ßen, um einen Aufnahmebereich (130) zu definieren;
die Rahmenstruktur (120) an der Unterseite derselben mit zwei voneinander beabstandeten Schlitzen (121) versehen ist;
die beiden Schlitze (121) die Rahmenstruktur (120) in einen ersten Rahmen (122), einen zweiten Rahmen (123) und einen dritten Rahmen (124) unterteilen;
der zweite Rahmen (123) und der dritte Rahmen (124) jeweils auf zwei Seiten des ersten Rahmens (122) angeordnet sind;
der erste Einspeisepunkt (1) und der zweite Einspeisepunkt (2) in einer selben Seite des Hauptkörpers (110) voneinander beabstandet sind;
der erste Erdungspunkt (3) in dem Aufnahmebereich (130) angeordnet ist;
der erste Einspeisepunkt (1) mit einem ersten Kontaktpunkt (1221) an dem ersten Rahmen (122) elektrisch verbunden ist;
der zweite Einspeisepunkt (2) mit einem zweiten Kontaktpunkt (1231) an dem zweiten Rahmen (123) elektrisch verbunden ist;
der erste Erdungspunkt (3) mit einem dritten Kontaktpunkt (1222) an dem ersten Rahmen (122) elektrisch verbunden ist, und ebenfalls mit einem vierten Kontaktpunkt (111) an dem Hauptkörper (110) elektrisch verbunden ist; und
ein elektrischer Verbindungskörper, welcher den ersten Einspeisepunkt (1), den ersten Kontaktpunkt (1221), den dritten Kontaktpunkt (1222), den ersten Erdungspunkt (3) und den vierten Kontaktpunkt (111) aufweist, eine erste Antenne bildet, und ein elektrischer Verbindungskörper, welcher den zweiten Einspeisepunkt (2), den zweiten Kontaktpunkt (1231) und einen Verbindungspunkt (1232) des zweiten Rahmens (123) und des Hauptkörpers (110) aufweist, eine zweite Antenne bildet, wobei der erste Erdungspunkt (3) nahe der zweiten Antenne angeordnet ist;
wobei die Antenne ferner aufweist:
eine erste Anpassungsschaltung (7), welche in Reihe zwischen dem ersten Erdungspunkt (3) und dem vierten Kontaktpunkt (111) geschaltet ist;
einen Abstimminduktor (8), wobei die erste Anpassungsschaltung (7) in Reihe mit dem Abstimminduktor (8) zwischen dem vierten Kontaktpunkt (111) und dem ersten Erdungspunkt (3) geschaltet ist; und
eine zweite Anpassungsschaltung (7) zwischen dem vierten Kontaktpunkt (111) und dem zweiten Kontaktpunkt (1231),
wobei die erste Anpassungsschaltung (7) eine Widerstand-Induktor-Kondensator-Schaltung, RLC, (71) und einen Schalter (72) aufweist, der dazu ausgebildet ist, die RLC-Schaltung (71) zu steuern, und die RLC-Schaltung (71) einen Widerstand, einen Kondensator und einen Induktor aufweist.

2. Antenne nach Anspruch 1, wobei
der erste Einspeisepunkt (1) und der zweite Einspeisepunkt (2) in einer Seite des Hauptkörpers (110) nahe dem zweiten Rahmen (121) voneinander beabstandet sind; und
der erste Erdungspunkt (3) über einem Ende des ersten Rahmens (122) nahe dem zweiten Rahmen (123) angeordnet ist.

3. Antenne nach Anspruch 1 oder 2, wobei der erste Kontaktpunkt (1221) an einem Ende des ersten Rahmens (122) nahe dem dritten Rahmen (124) angeordnet ist, und der dritte Kontaktpunkt (1222) an einem Ende des ersten Rahmens (122) nahe dem zweiten Rahmen (123) angeordnet ist.

4. Antenne nach Anspruch 3, wobei der zweite Kontaktpunkt (1231) auf einer von dem ersten Rahmen (122) entfernten Seite des zweiten Rahmens (123) angeordnet ist.

5. Antenne nach Anspruch 1 oder 2, wobei der vierte Kontaktpunkt (111) jeweils von dem ersten Einspeisepunkt (1) und dem zweiten Einspeisepunkt (2) beabstandet ist.

6. Antenne nach Anspruch 5, wobei der vierte Kontaktpunkt (111) auf einer dem Aufnahmebereich zugewandten Seite des Hauptkörpers (110) angeordnet ist.

7. Antenne nach einem der vorhergehenden Ansprüche, wobei
die Antenne ferner eine erste Spur (4), eine zweite Spur (5) und eine dritte Spur (6) aufweist;
der erste Einspeisepunkt (1) über die erste Spur (4) mit dem ersten Kontaktpunkt (1221) elektrisch verbunden ist, der zweite Einspeisepunkt (2) über die zweite Spur (5) mit dem zweiten Kontaktpunkt (1231) elektrisch verbunden ist, und der erste Erdungspunkt (3) über die dritte Spur (6) mit dem dritten Kontaktpunkt (1222) und dem vierten Kontaktpunkt (111) elektrisch verbunden ist.

8. Antenne nach Anspruch 7, wobei die erste Spur (4) ein erstes Segment, das mit dem ersten Kontaktpunkt (1221) verbunden ist, und ein zweites Segment aufweist, das ein von dem ersten Kontaktpunkt (1221) abgewandtes Ende des ersten Segments und den ersten Einspeisepunkt (1) verbindet, und das erste Segment und das zweite Segment als ein Biegeelement angeordnet sind.

9. Antenne nach einem der vorhergehenden Ansprüche, wobei die erste Antenne einen Frequenzbereich von 800 MHz bis 2170 MHz aufweist und die zweite Antenne einen Frequenzbereich von 2300 MHz bis 2690 MHz aufweist, und bei welcher die erste Antenne in Form einer Schleife und die zweite Antenne in Form einer invertierten F-Antenne, IFA; vorliegt.

10. Antenne nach Anspruch 1, wobei die RLC-Schaltung (71) eine erste RLC-Unterschaltung (711), eine zweite RLC-Unterschaltung (712), und eine dritte RLC-Unterschaltung (713) sowie eine vierte RLC-Unterschaltung (714) aufweist, der Schalter (72) ein einpoliger Vier-Wege-Schalter ist, der dazu ausgebildet ist, die erste Anpassungsschaltung (7) zu steuern, um eine oder mehrere unter der ersten RLC-Unterschaltung (711), der zweiten RLC-Unterschaltung (712), der dritten RLC-Unterschaltung (713) und der vierten RLC-Unterschaltung (714) zu wählen.

11. Antenne nach einem der vorhergehenden Ansprüche, ferner mit einem zweiten Erdungspunkt (9), wobei
der zweite Erdungspunkt (9) in dem Aufnahmebereich angeordnet ist,
der zweite Erdungspunkt (9) mit einem fünften Kontaktpunkt an dem ersten Rahmen (122) elektrisch verbunden ist, und mit einem sechsten Kontaktpunkt an dem Hauptkörper (110) elektrisch verbunden ist;
der fünfte Kontaktpunkt zwischen dem dritten Kontaktpunkt (1222) und dem zweiten Rahmen (123) angeordnet ist,
der sechste Kontaktpunkt zwischen dem vierten Kontaktpunkt (111) und einem den Hauptkörper (110) und den zweiten Rahmen (123) verbindenden Verbindungspunkt angeordnet ist, und
der fünfte Kontaktpunkt (1223) an einem Ende des ersten Rahmens (122) nahe dem zweiten Rahmen (123) angeordnet ist.

12. Antenne nach einem der vorhergehenden Ansprüche, ferner mit einem Schlitz (11), wobei
der Schlitz (11) an einer Seite des Hauptkörpers (110) angeordnet ist, die dem Aufnahmeraum zugewandt ist und zu dem zweiten Rahmen (123) und/oder dem dritten Rahmen (124) benachbart ist, und
eine Öffnung des Schlitzes (11) dem Aufnahmeraum zugewandt ist.

13. Ein Endgerät mit:
der Antenne (200) nach einem der vorhergehenden Ansprüche.

## Revendications

1. Antenne, comprenant un premier point d'alimentation (1), un second point d'alimentation (2) et un premier point de mise à la masse (3) et un corps métallique (100) ; dans laquelle
le corps métallique (100) comprend un corps principal (110) et une structure de cadre (120) reliée au corps principal (110) ;
le corps principal (110) et la structure de cadre (120) entourent un espace pour former une zone de réception (130) ;
la structure de cadre (120) est pourvue de deux encoches (121) espacées sur un fond de celle-ci ;
les deux encoches (121) divisent la structure de cadre (120) en un premier cadre (122), un deuxième cadre (123) et un troisième cadre (124) ;
le deuxième cadre (123) et le troisième cadre (124) sont disposés respectivement sur deux côtés du premier cadre (122) ;
le premier point d'alimentation (1) et le second point d'alimentation (2) sont espacés l'un de l'autre dans un même côté du corps principal (110) ;
le premier point de mise à la masse (3) est disposé dans la zone de réception (130) ;
le premier point d'alimentation (1) est électriquement connecté à un premier point de contact (1221) sur le premier cadre (122) ;
le second point d'alimentation (2) est électriquement connecté à un deuxième point de contact (1231) sur le deuxième cadre (123) ;
le premier point de mise à la masse (3) est électriquement connecté à un troisième point de contact (1222) sur le premier cadre (122), et est également connecté électriquement à un quatrième point de contact (111) sur le corps principal (110) ; et
un corps de connexion électrique comprenant le premier point d'alimentation (1), le premier point de contact (1221), le troisième point de contact (1222), le premier point de mise à la masse (3) et le quatrième point de contact (111) constitue une première antenne, et un corps de connexion électrique comprenant le second point d'alimentation (2), le deuxième point de contact (1231) et un point de jonction (1232) du deuxième cadre (123) et du corps principal (110) constitue une seconde antenne, le premier point de mise à la masse (3) étant disposé adjacente à la seconde antenne ;
l'antenne comprenant en outre :
un premier circuit de mise en correspondance (7) connecté en série entre le premier point de mise à la masse (3) et le quatrième point de contact (111) ;
un inducteur d'accord (8), le premier circuit de mise en correspondance (7) est connecté en série à l'inducteur d'accord (8) entre le quatrième point de contact (111) et le premier point de mise à la masse (3), et
un second circuit de mise en correspondance entre le quatrième point de contact (111) et le deuxième point de contact (1231) ;
le premier circuit de mise en correspondance (7) comprenant un circuit à résistance-inducteur-condensateur, RLC (71) et un commutateur (72) configuré pour commander le circuit RLC (71), et le circuit RLC (71) comprend une résistance, un condensateur et un inducteur.

2. Antenne selon la revendication 1, dans laquelle
le premier point d'alimentation (1) et le second point d'alimentation (2) sont espacés dans un côté du corps principal (110) adjacent au deuxième cadre (123), et
le premier point de mise à la masse (3) est disposé par-dessus une extrémité du premier cadre (122) adjacente au deuxième cadre (123).

3. Antenne selon la revendication 1 ou 2, dans laquelle le premier point de contact (1221) est disposé au niveau d'une extrémité du premier cadre (122) adjacente au troisième cadre (124), et le troisième point de contact (1222) est disposé au niveau d'une extrémité du premier cadre (122) adjacente au deuxième cadre (123).

4. Antenne selon la revendication 3, dans laquelle le deuxième point de contact (1231) est disposé sur un côté du deuxième cadre (123) à l'écart du premier cadre (122).

5. Antenne selon la revendication 1 ou 2, dans laquelle le quatrième point de contact (111) est espacé du premier point d'alimentation (1) et du second point d'alimentation (2), respectivement.

6. Antenne selon la revendication 5, dans laquelle le quatrième point de contact (111) est disposé au niveau d'un côté du corps principal (110) faisant face à la zone de réception.

7. Antenne selon l'une quelconque des revendications précédentes,
l'antenne comprenant en outre un premier tracé (4), un deuxième tracé (5) et un troisième tracé (6) ;
le premier point d'alimentation (1) étant électriquement connecté au premier point de contact (1221) par l'intermédiaire du premier tracé (4), le second point d'alimentation (2) étant électriquement connecté au deuxième point de contact (1231) par l'intermédiaire du deuxième tracé (5), et le premier point de mise à la masse (3) étant électriquement connecté au troisième point de contact (1222) et au quatrième point de contact (111) par l'intermédiaire du troisième tracé (6).

8. Antenne selon la revendication 7, dans laquelle le premier tracé (4) comprend un premier segment connecté au premier point de contact (1221) et un second segment connectant une extrémité du premier segment à l'écart du premier point de contact (1221) et le premier point d'alimentation (1), et le premier segment et le second segment sont disposés en tant qu'élément de flexion.

9. Antenne selon l'une quelconque des revendications précédentes, dans laquelle la première antenne a une plage de fréquence de 800 MHz à 2170 MHz et la seconde antenne a une plage de fréquence de 2300 MHz à 2690 MHz, et dans laquelle la première antenne est sous une forme d'une boucle et la seconde antenne est sous une forme d'une antenne en F inversée, IFA.

10. Antenne selon la revendication 1, dans laquelle le circuit RLC (71) comprend un premier sous-circuit RLC (711), un deuxième sous-circuit RLC (712), et un troisième sous-circuit RLC (713) et un quatrième sous-circuit RLC (714), le commutateur (72) est un commutateur unipolaire à quatre voies configuré pour commander le premier circuit de mise en correspondance (7) pour sélectionner un ou plusieurs parmi le premier sous-circuit RLC (711), le deuxième sous-circuit RLC (712), le troisième sous-circuit RLC et le quatrième sous-circuit RLC (714).

11. Antenne selon l'une quelconque des revendications précédentes, comprenant en outre un second point de mise à la masse (9), dans laquelle
le second point de mise à la masse (9) est disposé dans la zone de réception,
le second point de mise à la masse (9) est électriquement connecté à un cinquième point de contact sur le premier cadre (122) et électriquement connecté à un sixième point de contact sur le corps principal (110) ;
le cinquième point de contact est disposé entre le troisième point de contact (1222) et le deuxième cadre (123),
le sixième point de contact est disposé entre le quatrième point de contact (111) et un point de jonction reliant le corps principal (110) et le deuxième cadre (123), et
le cinquième point de contact (1223) est disposé au niveau d'une extrémité du premier cadre (122) adjacente au deuxième cadre (123).

12. Antenne selon l'une quelconque des revendications précédentes, comprenant en outre une fente (11), dans laquelle
la fente (11) est disposée sur un côté du corps principal (110) faisant face à la zone de réception et adjacent au deuxième cadre (123) et/ou au troisième cadre (124), et
une ouverture de la fente (11) fait face à la zone de réception.

13. Dispositif terminal comprenant l'antenne (200) selon l'une quelconque des revendications précédentes.
